# EUROPÄISCHE PATENTANMELDUNG

(11) **EP 3 945 339 A1**
(43) Veröffentlichungstag der Anmeldung: **02.02.2022**
(21) Anmeldenummer: 21187611.5
(22) Anmeldetag: 26.07.2021
(51) Int. Cl.: G01S 7/48, G01S 7/481, G01S 17/10, G01S 17/42, G01S 17/931

(54) **OPTISCHE DETEKTIONSVORRICHTUNG ZUR ÜBERWACHUNG WENIGSTENS EINES ÜBERWACHUNGSBEREICHS AUF OBJEKTE HIN UND VERFAHREN ZUM BETREIBEN EINER OPTISCHEN DETEKTIONSVORRICHTUNG**

(30) Priorität: 29.07.2020 DE 102020119942
(71) Anmelder: Valeo Schalter und Sensoren GmbH, 74321 Bietigheim-Bissingen (DE)
(72) Erfinder: BEUTH, Thorsten, 74321 Bietigheim-Bissingen (DE)
(74) Vertreter: Kluth, Philipp

(57) **Zusammenfassung**

Es werden eine Optische Detektionsvorrichtung (12) zur Überwachung wenigstens eines Überwachungsbereichs (14) auf Objekte (18) hin und ein Verfahren zum Betreiben einer optischen Detektionsvorrichtung (12) beschrieben. Die optische Detektionsvorrichtung (12) umfasst wenigstens eine Sendeeinrichtung (26), mit der elektromagnetische Strahlen (28) zum Abtasten des Überwachungsbereichs (14) gesendet werden können, wenigstens einem Empfangseinrichtung (36), mit der elektromagnetische Strahlen (32, 34) aus dem wenigstens einen Überwachungsbereich (14) empfangen werden können, wenigstens eine veränderbaren Strahlbeeinflussungseinrichtung (30), mit der elektromagnetische Strahlen (28, 32, 34) zumindest bezüglich ihrer Ausbreitungsrichtung beeinflusst werden können und wenigstens eine Steuer- und Auswerteeinrichtung (38), mit der die optische Detektionsvorrichtung (12) gesteuert werden kann und mit der aus empfangenen elektromagnetischen Strahlen (32, 34) Objektinformationen in Bezug auf Position (22, 24) und Farbe wenigstens eines erfassten Objekts (18) ermittelt werden können. Wenigstens eine Empfangseinrichtung (36) weist wenigstens einen Farb-Empfangsbereich (46a), mit dem Farbinformationen wenigstens eines Objekts (18) aus empfangenen elektromagnetischen Beleuchtungsstrahlen (34) ermittelt werden können, und wenigstens einen Abtast-Empfangsbereich (46b), mit dem elektromagnetische Abtaststrahlen (32), die mit wenigstens einer Sendeeinrichtung (26) gesendet und in dem wenigstens einen Überwachungsbereich (14) reflektiert werden, empfangen werden können, aus denen Positionsinformationen (22, 24) wenigstens eines Objekts (18) ermittelt werden können, auf.

## Beschreibung

### Technisches Gebiet

Die Erfindung betrifft eine optische Detektionsvorrichtung zur Überwachung wenigstens eines Überwachungsbereichs auf Objekte hin,
- mit wenigstens einer Sendeeinrichtung, mit der elektromagnetische Strahlen zum Abtasten des Überwachungsbereichs gesendet werden können,
- mit wenigstens einer Empfangseinrichtung, mit der elektromagnetische Strahlen aus dem wenigstens einen Überwachungsbereich empfangen werden können,
- mit wenigstens einer veränderbaren Strahlbeeinflussungseinrichtung, mit der elektromagnetische Strahlen zumindest bezüglich ihrer Ausbreitungsrichtung beeinflusst werden können,
- mit wenigstens einer Steuer- und Auswerteeinrichtung, mit der die optische Detektionsvorrichtung gesteuert werden kann und mit der aus empfangenen elektromagnetischen Strahlen Objektinformationen in Bezug auf Position und Farbe wenigstens eines erfassten Objekts ermittelt werden können.

Ferner betrifft die Erfindung ein Verfahren zum Betreiben einer optischen Detektionsvorrichtung zur Überwachung wenigstens eines Überwachungsbereichs auf Objekte hin, bei dem bei nacheinander folgenden Messungen jeweils
- mit wenigstens einer Sendeeinrichtung elektromagnetische Strahlen gesendet werden zum Abtasten des wenigstens einen Überwachungsbereichs,
- mit wenigstens einer Empfangseinrichtung elektromagnetische Strahlen aus dem wenigstens einen Überwachungsbereich empfangen werden,
- aus den empfangenen elektromagnetischen Strahlen Objektinformationen in Bezug auf Position und Farbe wenigstens eines erfassten Objekts ermittelt werden,
- wobei mit wenigstens einer veränderbaren Strahlbeeinflussungseinrichtung zwischen wenigstens zwei Messungen wenigstens für einen Teil der elektromagnetischen Strahlen wenigstens eine jeweilige Ausbreitungsrichtung geändert wird.

### Stand der Technik

Aus der DE 10 2009 015 920 B4 ist eine Vorrichtung zum optischen Abtasten und Vermessen einer Umgebung, die als Laserscanner ausgebildet ist, bekannt. Die Vorrichtung umfasst einen Lichtsender, der einen Sendelichtstrahl aussendet, einen Lichtempfänger, der einen von einem Objekt in der Umgebung des Laserscanners reflektierten oder sonst einen irgendwie gestreuten Empfangsstrahl empfängt, und eine Steuer- und Auswertevorrichtung, die für eine Vielzahl von Messpunkten jeweils wenigstens die Distanz zum Objekt ermittelt. Mit der Vorrichtung ist es möglich, den Sendelichtstrahl "farbig" auszubilden, sodass der Empfangslichtstrahl bereits die Farbinformation enthält. Für die Ermittlung der Farb- und Helligkeitsinformationen werden drei Laserstrahlen benötigt. Für die Ermittlung der Distanzen hingegen reicht ein Laserstrahl aus, welcher moduliert ist, und welcher eine höhere Intensität als die beiden anderen Laserstrahlen aufweist.

Der Erfindung liegt die Aufgabe zugrunde, eine optische Detektionsvorrichtung und ein Verfahren der eingangs genannten Art zu gestalten, mit denen Farbinformationen und Positionsinformationen von erfassten Objekten besser, insbesondere einfacher und/oder genauer, ermittelt werden können.

### Offenbarung der Erfindung

Diese Aufgabe wird erfindungsgemäß bei der optischen Detektionsvorrichtung dadurch gelöst, dass wenigstens eine Empfangseinrichtung aufweist
- wenigstens einen Farb-Empfangsbereich, mit dem Farbinformationen wenigstens eines Objekts aus empfangenen elektromagnetischen Beleuchtungsstrahlen ermittelt werden können,
- und wenigstens einen Abtast-Empfangsbereich, mit dem elektromagnetische Abtaststrahlen, die mit wenigstens einer Sendeeinrichtung gesendet und in dem wenigstens einen Überwachungsbereich reflektiert werden, empfangen werden können, aus denen Positionsinformationen wenigstens eines Objekts ermittelt werden können.

Erfindungsgemäß weist die wenigstens eine Empfangseinrichtung wenigstens einen Farb-Empfangsbereich und wenigstens einen Abtast-Empfangsbereich auf. Auf diese Weise können mit wenigstens einer Empfangseinrichtung sowohl Farbinformationen aus den elektromagnetischen Beleuchtungsstrahlen als auch Positionsinformationen aus den reflektierten elektromagnetischen Abtaststrahlen gewonnen werden. Ebenso können zu den Farb- und/oder Positionsinformationen die Signalstärken ermittelt werden.

Mit der optischen Detektionsvorrichtung können Positionsinformationen, insbesondere Entfernungen, Geschwindigkeiten und/oder Richtungen von erfassten Objekten relativ zur optischen Detektionsvorrichtung erfasst werden. Ferner können Farbinformationen, insbesondere Farbintensitäten, Farbverläufe oder dergleichen, von Objekten erfasst werden.

Vorteilhafterweise können die Farbinformationen in einem RGB-Farbraum ermittelt werden. Auf diese Weise können die Farbinformationen bezogen auf die Farbwahrnehmung des menschlichen Auges angegeben werden.

Bei den elektromagnetischen Abtaststrahlen kann es sich vorteilhafterweise um Lichtsignale, insbesondere Lichtpulse, handeln. Lichtsignale können definiert, insbesondere codiert, und zugeordnet werden. Mit gepulsten Lichtsignalen, insbesondere Lichtpulsen, können Laufzeitmessungen durchgeführt werden, mit denen Entfernung bestimmt werden können.

Die elektromagnetischen Beleuchtungsstrahlen können durch externe, also nicht in der optischen Detektionsvorrichtung enthaltene, Lichtquellen oder durch hierfür vorgesehene Lichtquellen der optischen Detektionsvorrichtung erzeugt werden. Bei den elektromagnetischen Beleuchtungsstrahlen kann es sich um Sonnenlicht oder künstliches Licht handeln. Mit den elektromagnetischen Beleuchtungsstrahlen kann ein Objekt angeleuchtet werden. Die reflektierten elektromagnetischen Beleuchtungsstrahlen können mit wenigstens einer Empfangseinrichtung der optischen Detektionsvorrichtung empfangen werden.

Die wenigstens eine Strahlbeeinflussungseinrichtung ist veränderbar. Das bedeutet, dass ihre funktionale Wirkung auf elektromagnetische Strahlen sich kontinuierlich oder schrittweise verändert. Vorteilhafterweise kann die wenigstens eine Strahlbeeinflussungseinrichtung insbesondere von Messung zu Messung eingestellt werden, um die funktionale Wirkung auf elektromagnetische Strahlen zu verändern.

Vorteilhafterweise kann die optische Detektionsvorrichtung nach einem Lichtlaufzeitverfahren, insbesondere einem Lichtimpulslaufzeitverfahren, arbeiten. Nach dem Lichtimpulslaufzeitverfahren arbeitende optische Detektionsvorrichtungen können als Time-of-Flight- (TOF), Light-Detection-and-Ranging-Systeme (LiDAR), Laser-Detection-and-Ranging-Systeme (LaDAR) oder dergleichen ausgestaltet und bezeichnet werden. Dabei wird eine Laufzeit vom Aussenden eines Abtaststrahls, insbesondere eines Lichtpulses, mit einer Sendeeinrichtung und dem Empfang des entsprechenden reflektierten Abtaststrahls mit einer Empfangseinrichtung gemessen und daraus eine Entfernung zwischen der Detektionsvorrichtung und dem erfassten Objekt ermittelt.

Vorteilhafterweise kann die optische Detektionsvorrichtung als scannendes System ausgestaltet sein. Dabei kann mit elektromagnetischen Abtaststrahlen ein Überwachungsbereich abgetastet, also abgescannt, werden. Dazu können die Ausbreitungsrichtungen der Abtaststrahlen über den Überwachungsbereich geschwenkt werden. Hierbei kann wenigstens eine Strahlbeeinflussungseinrichtung insbesondere eine Scaneinrichtung, eine Umlenkspiegeleinrichtung oder dergleichen, zum Einsatz kommen.

Vorteilhafterweise kann die optische Detektionsvorrichtung als laserbasiertes Entfernungsmesssystem ausgestaltet sein. Das laserbasierte Entfernungsmesssystem kann als Lichtquelle wenigstens einer Sendeeinrichtung wenigstens einen Laser, insbesondere einen Diodenlaser, aufweisen. Mit einem Laser können insbesondere gepulste elektromagnetische Abtaststrahlen, insbesondere Laserpulse, gesendet werden. Mit dem Laser können Abtaststrahlen in für das menschliche Auge sichtbaren oder nicht sichtbaren Wellenlängenbereichen, insbesondere im nahen Infrarot, emittiert werden. Entsprechend kann wenigstens eine Empfangseinrichtung wenigstens einen wenigstens abschnittsweise für die Wellenlänge des ausgesendeten Lichtes ausgelegten Empfänger, insbesondere einen Punktsensor, Zeilensensor oder Flächensensor, im Besonderen eine (Lawinen)Photodiode, eine Photodiodenzeile, einen CCD-Sensor, einen Active-Pixel-Sensor, insbesondere einen CMOS-Sensor oder dergleichen, aufweisen. Das laserbasierte Entfernungsmesssystem kann vorteilhafterweise ein Laserscanner sein. Mit einem Laserscanner kann ein Überwachungsbereich mit insbesondere gepulsten Laserstrahlen abgetastet werden.

Die Erfindung kann bei einem Fahrzeug, insbesondere einem Kraftfahrzeug, verwendet werden. Vorteilhafterweise kann die Erfindung bei einem Landfahrzeug, insbesondere einem Personenkraftwagen, einem Lastkraftwagen, einem Bus, einem Motorrad oder dergleichen, einem Luftfahrzeug und/oder einem Wasserfahrzeug verwendet werden. Die Erfindung kann auch bei Fahrzeugen eingesetzt werden, die autonom oder wenigstens teilautonom betrieben werden können. Die Erfindung ist jedoch nicht beschränkt auf Fahrzeuge. Sie kann auch im stationären Betrieb eingesetzt werden.

Die optische Detektionsvorrichtung kann vorteilhafterweise mit wenigstens einer elektronischen Steuervorrichtung eines Fahrzeugs, insbesondere einem Fahrerassistenzsystem und/oder einer Fahrwerksregelung und/oder einer Fahrer-Informationseinrichtung und/oder einem Parkassistenzsystem und/oder einer Gestenerkennung oder dergleichen, verbunden oder Teil einer solchen sein. Auf diese Weise kann das Fahrzeug autonom oder teilautonom betrieben werden.

Mit der optischen Detektionsvorrichtung können stehende oder bewegte Objekte, insbesondere Fahrzeuge, Personen, Tiere, Pflanzen, Hindernisse, Fahrbahnunebenheiten, insbesondere Schlaglöcher oder Steine, Fahrbahnbegrenzungen, Verkehrszeichen, Freiräume, insbesondere Parklücken, Niederschlag oder dergleichen, erfasst werden.

Insbesondere beim Einsatz der optischen Detektionsvorrichtung in einem Fahrzeug zur Überwachung des Umfelds des Fahrzeugs, kann sich eine Orientierung "räumlich horizontal" und "räumlich vertikal" auf ein Fahrwerk des Fahrzeugs und somit auf einen Fahrweg des Fahrzeugs beziehen. Insbesondere kann eine bestimmungsgemäß räumlich horizontale Ebene des Fahrzeugs durch eine Fahrzeuglängsachse und eine Fahrzeugquerachse aufgespannt werden. Eine räumlich vertikale Richtung kann senkrecht zu besagter räumlich horizontaler Ebene des Fahrzeugs verlaufen. Je nach Ausrichtung des Fahrzeugs kann demnach die räumlich horizontale Ebene parallel zum geographischen Horizont und die räumlich vertikale Richtung senkrecht zum geographischen Horizont verlaufen.

Bei einer vorteilhaften Ausführungsform kann wenigstens eine Empfangseinrichtung wenigstens einen Empfänger umfassen, der wenigstens einen Farb-Empfangsbereich und wenigstens einen Abtast-Empfangsbereich aufweist. Auf diese Weise kann mit wenigstens einem Empfänger sowohl die Farbinformation aus den elektromagnetischen Beleuchtungsstrahlen als auch die Entfernungsinformation aus den reflektierten elektromagnetische Abtaststrahlen ermittelt werden. Die Ansteuerung und das Auslesen des wenigstens einen Empfängers, respektive des wenigstens einen Farb-Empfangsbereich und des wenigstens einen Abtast-Empfangsbereich, kann somit vereinfacht werden.

Bei einer weiteren vorteilhaften Ausführungsform kann wenigstens ein Farb-Empfangsbereich eine Mehrzahl von Empfangselementen aufweisen und/oder wenigstens ein Entfernungs-Empfangsbereich kann eine Mehrzahl von Empfangselementen aufweisen. Auf diese Weise können die Farbinformationen und/oder der Positionsinformationen ortsaufgelöst ermittelt werden.

Vorteilhafterweise können der wenigstens eine Farb-Empfangsbereich und/oder der wenigstens eine Abtast-Empfangsbereich eine einem Empfänger ausgestaltet sein, der als Punktsensor, Zeilensensor oder Flächensensor, im Besonderen als (Lawinen)fotodiode, als Photodiodenzeile, als CCD-Sensor, als Active-Pixel-Sensor, insbesondere als CMOS-Sensor oder dergleichen, realisiert ist. Bei derartigen Empfängern können die entsprechenden Empfangselemente gezielt angesteuert und ausgelesen werden. Ferner kann auf diese Weise der wenigstens eine Farb-Empfangsbereich und/oder der wenigstens einen Abtast-Empfangsbereich kompakt realisiert werden. Die Empfangselemente von Empfangsbereichen können auch als "Pixel" bezeichnet werden.

Bei einer weiteren vorteilhaften Ausführungsform können wenigstens ein Farb-Empfangsbereich und wenigstens ein Abtast-Empfangsbereich räumlich nebeneinander angeordnet sein. Auf diese Weise können auch die den Empfangsbereichen entsprechenden Sichtfelder im Überwachungsbereich räumlich nebeneinander angeordnet sein.

Das Sichtfeld eines Empfangsbereichs ist der Abschnitt des Überwachungsbereichs, aus welchem elektromagnetische Strahlen mit dem entsprechenden Empfangsbereich empfangen werden können.

Bei einer weiteren vorteilhaften Ausführungsform können wenigstens ein Farb-Empfangsbereich und wenigstens ein Abtast-Empfangsbereich bezüglich einer Ebene nebeneinander angeordnet sein, in der eine Ausbreitungsrichtung der elektromagnetischen Abtaststrahlen mit der wenigstens einen Strahlbeeinflussungseinrichtung verändert werden kann. Auf diese Weise können die den jeweiligen Empfangsbereichen zugehörigen Sichtfelder über den Überwachungsbereich geschwenkt werden. So kann der Überwachungsbereich sukzessive, insbesondere von Messung zu Messung, abgetastet werden. Dabei können bei einer Messung in einem Abschnitt des Überwachungsbereichs, welche sich im Sichtfeld des wenigstens einen Farb-Empfangsbereichs befindet, Farbinformation von einem erfassten Objekt ermittelt werden. In einem benachbarten Abschnitt des Überwachungsbereichs, welcher sich im Sichtfeld des wenigstens einen Abtast-Empfangsbereichs befindet, können Positionsinformationen von dem Objekt ermittelt werden.

Vorteilhafterweise kann wenigstens ein Sichtfeld wenigstens eines Farb-Empfangsbereichs und wenigstens ein Sichtfeld wenigstens eines Abtast-Empfangsbereichs insbesondere bezüglich der Ebene nebeneinander angeordnet sein, bezüglich der eine Ausbreitungsrichtung der elektromagnetischen Abtaststrahlen veränderbar ist. Auf diese Weise können durch entsprechendes verändern der Sichtfelder zwischen den Messungen, bei einer Messung die Farbinformationen eines Objekts aus einem Abschnitt des Überwachungsbereichs und bei einer anderen Messung die Positionsinformationen des Objekts in demselben Abschnitt des Überwachungsbereichs ermittelt werden.

Bei einer weiteren vorteilhaften Ausführungsform kann wenigstens einem Farb-Empfangsbereich wenigstens ein optischer Farbfilter zugeordnet sein und/oder wenigstens einem Abtast-Empfangsbereich kann wenigstens ein optischer Bandbreitenfilter zugeordnet sein, welcher die Wellenlänge der elektromagnetischen Abtaststrahlen enthält. Die optischen Filter selektieren die elektromagnetische Strahlen nach der Wellenlänge.

Mit Hilfe von Farbfiltern kann mit dem entsprechenden Farb-Empfangsbereich die Intensität des durchgelassenen Farbanteils der elektromagnetischen Strahlen bestimmt werden.

Mit dem optischen Bandbreitenfilter, welche auch als Bandpass bezeichnet werden kann, können elektromagnetische Strahlen, deren Wellenlänge sich nicht innerhalb der Bandbreite des Bandbreitenfilters im Umfeld der Wellenlänge der elektromagnetischen Abtaststrahlen befindet, herausgefiltert werden. Auf diese Weise kann ein Signal-Rausch-Verhältnis für die reflektierten elektromagnetischen Abtaststrahlen in dem wenigstens ein Abtast-Empfangsbereich verbessert werden.

Vorteilhafterweise kann die Bandbreite des Bandbreitenfilters so vorgegeben sein, dass auch elektromagnetischen Abtaststrahlen, deren Wellenlänge durch Doppler verschoben sind, den Bandbreitenfilter passieren können. Eine Dopplerverschiebung der Elektromagneten Abtaststrahlen kann insbesondere durch Bewegungen von Objekten relativ zur Detektionsvorrichtung hervorgerufen werden. Aus der Dopplerverschiebung kann eine Geschwindigkeit eines Objekts relativ zur Detektionsvorrichtung bestimmt werden.

Bei einer weiteren vorteilhaften Ausführungsform kann wenigstens einem Farb-Empfangsbereich wenigstens ein optischer Farbfilter in Form einer Bayer-Matrix zugeordnet sein. Bei einer Bayer-Matrix werden die Rotfilter, Grünfilter und Blaufilter entsprechenden Empfangselementen des Farb-Empfangsbereichs zugeordnet. Auf diese Weise kann die Erfassung der Farbinformationen in Bezug auf Helligkeitswahrnehmung, Kontrast- und Schärfewahrnehmung entsprechend dem menschlichen Auge ermittelt werden.

Bei einer weiteren vorteilhaften Ausführungsform kann die Wellenlänge wenigstens eines Teils der elektromagnetischen Abtaststrahlen in einem für das menschliche Auge nicht sichtbaren Wellenlängenbereich, insbesondere im nahen Infrarot, liegen. Auf diese Weise können die Farbinformationen und die Positionsinformationen besser voneinander getrennt ermittelt und so genauer durchgeführt werden. Ferner kann so eine gesundheitsschädliche und/oder störender Einfluss der elektromagnetischen Abtaststrahlen auf Personen vermieden werden. So kann die Augensicherheit der Detektionsvorrichtung verbessert werden. Außerdem kann die Betriebssicherheit insbesondere im Straßenverkehr verbessert werden.

Bei einer weiteren vorteilhaften Ausführungsform kann wenigstens eine Strahlbeeinflussungseinrichtung wenigstens ein optisches Bauteil, mit dem elektromagnetische Strahlen gebeugt oder gebrochen werden können, und/oder wenigstens ein Umlenkbauteil, mit dem Ausbreitungsrichtungen von elektromagnetischen Strahlen umgelenkt werden können, aufweisen.

Mit wenigstens einem optischen Bauteil können elektromagnetische Strahlen gebeugt oder gebrochen werden. Auf diese Weise können elektromagnetische Strahlen gesammelt oder gestreut werden. So kann mit wenigstens einem optischen Bauteil ein Objekt auf einen Empfangsbereich einer Empfangseinrichtung abgebildet werden.

Vorteilhafterweise kann wenigstens ein optisches Bauteil wenigstens eine optische Linse aufweisen. Mit optischen Linsen können elektromagnetische Strahlen, insbesondere Lichtstrahlen, gebeugt oder gebrochen werden. So kann ein Lichtstrahl aufgeweitet oder fokussiert werden. Mit einem geeigneten optischen Bauteil können die Objekte entsprechend auf den Empfangsbereichen abgebildet werden.

Mit wenigstens einem Umlenkbauteil kann die Ausbreitungsrichtung von elektromagnetischen Strahlen umgelenkt werden. Auf diese Weise können elektromagnetischen Strahlen, welche aus dem Überwachungsbereich kommen, insbesondere reflektierte Abtaststrahlen und/oder reflektierte Beleuchtungsstrahlen, auf den entsprechenden Empfangsbereich gelenkt werden. Alternativ oder zusätzlich können elektromagnetische Abtaststrahlen, welche von wenigstens einer Sendeeinrichtung kommen, in entsprechende Abschnitte des Überwachungsbereichs gelenkt werden.

Vorteilhafterweise kann wenigstens ein Umlenkbauteil wenigstens einen Spiegel oder dergleichen aufweisen. Mit einem Spiegel können elektromagnetische Strahlen, insbesondere Lichtstrahlen, entsprechend umgelenkt werden.

Vorteilhafterweise kann das wenigstens eine Umlenkbauteil einstellbar sein. Auf diese Weise kann eine Umlenkrichtung verändert werden. Durch entsprechende Einstellung des wenigstens eine Umlenkbauteil kann die Ausbreitungsrichtung von elektromagnetischer Strahlen verändert werden.

Vorteilhafterweise kann es sich bei dem wenigstens einen Umlenkbauteil um einen Umlenkspiegel handeln. Der Umlenkspiegel kann um eine Drehachse zumindest in einer Drehrichtung drehbar oder schwenkbar sein. Auf diese Weise können die Ausbreitungsrichtungen der entsprechenden elektromagnetischen Strahlen entsprechend um die Drehachse durch entsprechendes Drehen oder Schwenken des Umlenkspiegels geschwenkt werden. So kann der Überwachungsbereich entsprechend in Richtung senkrecht zur Drehachse abgetastet werden.

Der Umlenkspiegel kann schwingend oder drehend angetrieben sein. Die Umlenkwirkung kann so kontinuierlich verändert werden. Alternativ kann eine Drehstellung des Umlenkspiegels für jede Messung vorgegeben, also eingestellt, werden und zwischen Messungen verändert werden. So kann der Überwachungsbereich schrittweise abgetastet werden.

Bei einer weiteren vorteilhaften Ausführungsform können wenigstens eine Sendeeinrichtung, wenigstens eine Empfangseinrichtung und wenigstens eine Strahlbeeinflussungseinrichtung so aneinander angepasst sein, dass sich die elektromagnetischen Abtaststrahlen im Überwachungsbereich innerhalb eines jeweiligen Sichtfeldes wenigstens eines Abtast-Empfangsbereichs ausbreiten können. Auf diese Weise können die reflektierten elektromagnetischen Abtaststrahlen bei unterschiedlichen Einstellungen der wenigstens einen Strahlbeeinflussungseinrichtung auf den wenigstens einen Abtast-Empfangsbereich treffen.

Ferner wird die Aufgabe erfindungsgemäß bei dem Verfahren dadurch gelöst, dass
- elektromagnetische Beleuchtungsstrahlen aus dem wenigstens einen Überwachungsbereich mit wenigstens einem Farb-Empfangsbereich wenigstens einer Empfangseinrichtung empfangen werden und aus den empfangenen elektromagnetischen Beleuchtungsstrahlen Farbinformationen wenigstens eines erfassten Objekts ermittelt werden,
- in dem wenigstens einen Überwachungsbereich reflektierte elektromagnetische Abtaststrahlen mit wenigstens einem Abtast-Empfangsbereich empfangen werden und aus der empfangenen elektromagnetischen Abtaststrahlen Positionsinformationen wenigstens eines erfassten Objekts ermittelt.

Erfindungsgemäß werden gleichzeitig sowohl Farbinformationen als auch Positionsinformationen für wenigstens ein in dem Überwachungsbereich erfasstes Objekt ermittelt. Bei einer vorteilhaften Ausgestaltung des Verfahrens kann wenigstens ein Teil der Farbinformationen und wenigstens ein Teil der Positionsinformationen des wenigstens einen erfassten Objekts fusioniert werden. Auf diese Weise kann ein erfasstes Objekt sowohl über die Farbinformationen bezogen auf seine Art als auch über die Positionsinformationen bezogen auf seinen Zustand, insbesondere Entfernungen, Richtungen und/oder Geschwindigkeiten, genauer charakterisiert werden. In Verbindung mit einem Fahrerassistenzsystem kann so die Betriebssicherheit des Fahrzeugs verbessert werden.

Bei einer weiteren vorteilhaften Ausgestaltung des Verfahrens kann wenigstens ein Teil der Farbinformationen aus einer Messung fusioniert werden mit wenigstens einem Teil der Positionsinformationen aus einer anderen Messung, wobei die Ausbreitungsrichtungen der elektromagnetischen Abtaststrahlen und die Sichtfelder des wenigstens einen Abtast-Empfangsbereichs und des wenigstens einen Farb-Empfangsbereichs zwischen den Messungen verändert werden. Auf diese Weise können die Farbinformationen und die Positionsinformationen von unterschiedlichen Abschnitten des Überwachungsbereichs getrennt voneinander ermittelt werden und anschließend zusammengebracht werden. So können die Farbinformationen und die Positionsinformationen jeweils für sich betrachtet genauer ermittelt werden.

Bei einer weiteren vorteilhaften Ausgestaltung des Verfahrens können zwischen zwei Messungen jeweilige Ausbreitungsrichtungen von elektromagnetischen Abtaststrahlen, von reflektierten elektromagnetischen Abtaststrahlen und von elektromagnetische Beleuchtungsstrahlen, die an wenigstens einem Objekt reflektiert werden, so verändert werden, dass mit einem Farb-Sichtfeld wenigstens eines Farb-Empfangsbereichs bei einer der Messungen eine Zone des wenigstens einen Objekts erfasst wird, welche bei einer anderen Messung wenigstens teilweise in einem Abtast-Sichtfeld wenigstens eines Abtast-Empfangsbereichs liegt und von dem entsprechenden Abtast-Sichtfeld erfasst wird. Auf diese Weise können die Farbinformationen und die Positionsinformationen ein- und derselben Zone des Objekts bei unterschiedlichen Messungen aufgenommen und anschließend fusioniert werden.

Bei einer weiteren vorteilhaften Ausgestaltung des Verfahrens können die Sichtfelder wenigstens eines Abtast-Empfangsbereichs und wenigstens eines Farb-Empfangsbereichs schrittweise von Messung zu Messung in wenigstens eine Richtung geschwenkt werden. Auf diese Weise kann der wenigstens eine Überwachungsbereich schrittweise in einer Richtung abgetastet werden. Dabei können die Farbinformationen und die Positionsinformationen eines Objekts erfasst werden.

Vorteilhafterweise können die Sichtfelder wenigstens eines Abtast-Empfangsbereichs und wenigstens eine Farb-Empfangsbereichs in einer Richtung verschoben werden. Auf diese Weise können die Farbinformationen und die Positionsinformationen aus den Einzelmessungen einfacher fusioniert werden.

Im Übrigen gelten die im Zusammenhang mit der erfindungsgemäßen Detektionsvorrichtung und dem erfindungsgemäßen Verfahren und deren jeweiligen vorteilhaften Ausgestaltungen aufgezeigten Merkmale und Vorteile untereinander entsprechend und umgekehrt. Die einzelnen Merkmale und Vorteile können selbstverständlich untereinander kombiniert werden, wobei sich weitere vorteilhafte Wirkungen einstellen können, die über die Summe der Einzelwirkungen hinausgehen.

### Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen schematisch
- Figur 1: eine Vorderansicht eines Fahrzeugs mit einem Fahrerassistenzsystem und einer eines Laserscanners zur Überwachung eines Überwachungsbereichs in Fahrtrichtung vor dem Fahrzeug;
- Figur 2: eine Funktionsdarstellung des Fahrzeugs aus der Figur 1 mit dem Fahrerassistenzsystem und dem Laserscanner;
- Figur 3: eine Vorderansicht eines Empfängers einer Empfangseinrichtung des Laserscanners aus den Figuren 1 und 2;
- Figur 4: den Laserscanner aus den Figuren 1 und 2 in der Draufsicht bei einer Messung eines Abschnitts des Überwachungsbereichs;
- Figur 5: den Laserscanner aus der Figur 4 bei einer anderen Messung eines anderen Abschnitts des Überwachungsbereichs.

In den Figuren sind gleiche Bauteile mit gleichen Bezugszeichen versehen.

### Ausführungsform(en) der Erfindung

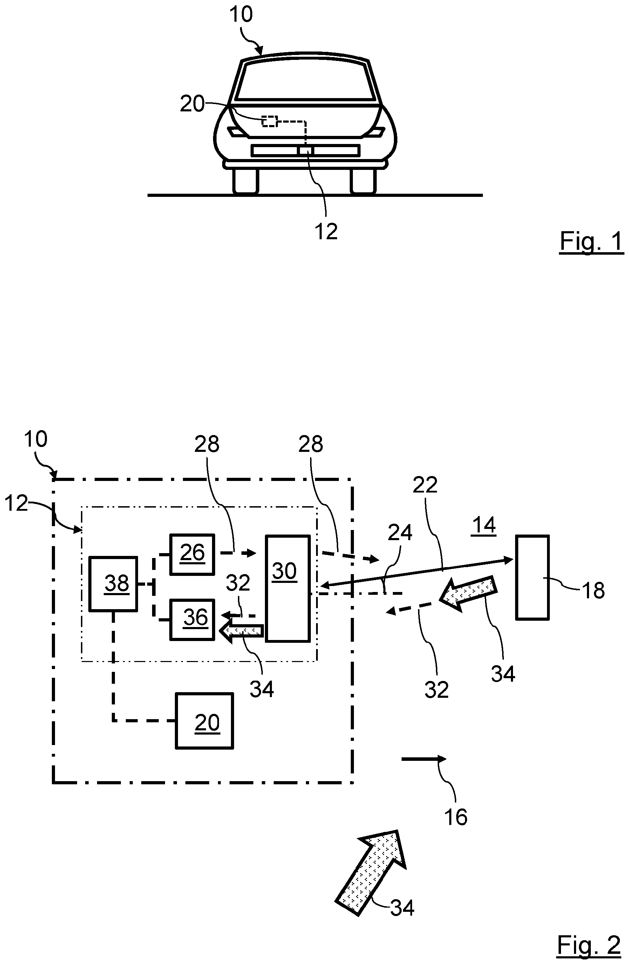

In der Figur 1 ist ein Fahrzeug 10 in Form eines Personenkraftwagens in der Vorderansicht gezeigt. Die Figur 2 zeigt eine Funktionsdarstellung des Fahrzeugs 10. Das Fahrzeug 10 verfügt über eine optische Detektionsvorrichtung in Form eines Laserscanners 12. Der Laserscanner 12 ist beispielhaft in der vorderen Stoßstange des Fahrzeugs 10 angeordnet und in Fahrtrichtung 16 nach vorne gerichtet. Mit dem Laserscanner 12 kann ein Überwachungsbereich 14 in Fahrtrichtung 16 vor dem Fahrzeug 10 auf Objekte 18 hin überwacht werden. Der Laserscanner 12 kann auch an anderer Stelle des Fahrzeugs 10 und anders ausgerichtet angeordnet sein.

Mit dem Laserscanner 12 können stehende oder bewegte Objekte 18, beispielsweise Fahrzeuge, Personen, Tiere, Pflanzen, Hindernisse, Fahrbahnunebenheiten, insbesondere Schlaglöcher oder Steine, Fahrbahnbegrenzungen, Verkehrszeichen, Freiräume, insbesondere Parklücken, Niederschlag oder dergleichen, erfasst werden.

Ferner verfügt das Fahrzeug 10 über ein Fahrerassistenzsystem 20, mit dem das Fahrzeug 10 autonom oder teilweise autonom betrieben werden kann. Das Fahrerassistenzsystem 20 ist funktional mit dem Laserscanner 12 verbunden. Auf diese Weise können Objektinformationen, beispielsweise Farbinformationen und Positionsinformationen, über Objekte 18 im Überwachungsbereich 14, welche mit dem Laserscanner 12 ermittelt werden, an das Fahrerassistenzsystem 20 übermittelt werden. Mit dem Fahrerassistenzsystem 20 können die Objektinformationen zur Unterstützung des Betriebs des Fahrzeugs 10 herangezogen werden.

Die Positionsinformationen von Objekten 18, welche mit dem Laserscanner 12 ermittelt werden können, umfassen beispielhaft einen Entfernung 22, eine Geschwindigkeit und eine Richtung 24 des Objekts 18 relativ zu dem Fahrzeug 10, respektive zu dem Laserscanner 12. Die Richtung 24 kann beispielsweise als Azimut beispielsweise in Bezug auf eine Fahrzeuglängsachse angegeben werden.

Der Laserscanner 12 umfasst eine Sendeeinrichtung 26, mit der elektromagnetische Abtaststrahlen 28 gesendet werden können. Die Abtaststrahlen 28 sind beispielhaft gepulste Laserstrahlen beispielsweise im NIR-Bereich. Die Sendeeinrichtung 26 verfügt hierzu beispielsweise über eine Laserdiode, mit welcher die Abtaststrahlen 28 gesendet werden können.

Ferner umfasst der Laserscanner 12 eine Strahlbeeinflussungseinrichtung 30. Mit der Strahlbeeinflussungseinrichtung 30 können elektromagnetische Strahlen, beispielsweise die Abtaststrahlen 28, an einem Objekt 18 reflektierte Abtaststrahlen 32 und an einem Objekt 18 reflektierte elektromagnetische Beleuchtungsstrahlen 34 veränderbar in ihrer Form und in ihrer Ausbreitungsrichtung gelenkt werden können. Die elektromagnetischen Beleuchtungsstrahlen 34 können beispielsweise Sonnenlicht und/oder Kunstlicht von einer externen Lichtquelle aufweisen oder daraus bestehen. Die Beleuchtungsstrahlen 34 sollten zumindest die Farbanteile Rot, Grün und Blau enthalten, um möglichst umfassende Farbinformationen über das Objekt 18 ermitteln zu können. Die größer der Wellenlängenbereich der Beleuchtungsstrahlen 34 insbesondere im sichtbaren Bereich ist, umso genauer können die Farbinformationen ermittelt werden. Mit dem Beleuchtungsstrahlen 34 können Objekte 18 zumindest auf der Seite, welche dem Laserscanner 12 zugewandt ist, beleuchtet werden.

Mit der Strahlbeeinflussungseinrichtung 30 können aus dem Überwachungsbereich 14 kommende reflektierte Abtaststrahlen 32 und reflektierte Beleuchtungsstrahlen 34 auf eine Empfangseinrichtung 36 des Laserscanners 12 gelenkt und abgebildet werden.

Mit der Empfangseinrichtung 36 können die reflektierten Abtaststrahlen 32 und die reflektierten Beleuchtungsstrahlen 34 in entsprechende elektrische Signale umgewandelt werden. Die elektrischen Signale können an eine Steuer- und Auswerteeinrichtung 38 des Laserscanners 12 übermittelt und ausgewertet werden.

Mit dem Laserscanner 12 können Positionsinformationen über ein erfasstes Objekt 18 ermittelt werden. So kann beispielsweise nach einem Lichtlaufzeitverfahren, bei dem die Laufzeit zwischen dem Senden eines Abtaststrahls 28 und dem Empfang des entsprechenden reflektierten Abtaststrahls 32 gemessen wird, die Entfernung 22 des Objekts 18 relativ zu dem Laserscanner 12 ermittelt werden. Ferner kann aus einem Einstellwert der Strahlbeeinflussungseinrichtung 30 bei der Messung die Richtung 24 des Objekts 18 relativ zum Laserscanner 12 ermittelt werden. Aus den Abtaststrahlen 28 und den reflektierten Abtaststrahlen 32 kann darüber hinaus beispielsweise aus einer Dopplerverschiebung der reflektierten Abtaststrahlen 32 eine Geschwindigkeit des Objekts 18 relativ zum Laserscanner 12 ermittelt werden.

Außerdem können mit dem Laserscanner 12 aus den reflektierten Beleuchtungsstrahlen 34 Farbinformationen über das erfasste Objekt 18 ermittelt werden.

Die Farbinformationen und die Positionsinformationen über das Objekt 18 können mit der Steuer- und Auswerteeinrichtung 38 zu gesamten Objektinformationen fusioniert werden. Mit den gesamten Objektinformationen kann das Objekt 18 genauer charakterisiert werden. Die gesamten Objektinformationen, welche die fusionierten Positionsinformationen und Farbinformationen enthalten, können mit der Steuer- und Auswerteeinrichtung 38 zur dortigen Verwendung an das Fahrerassistenzsystem 20 übermittelt werden.

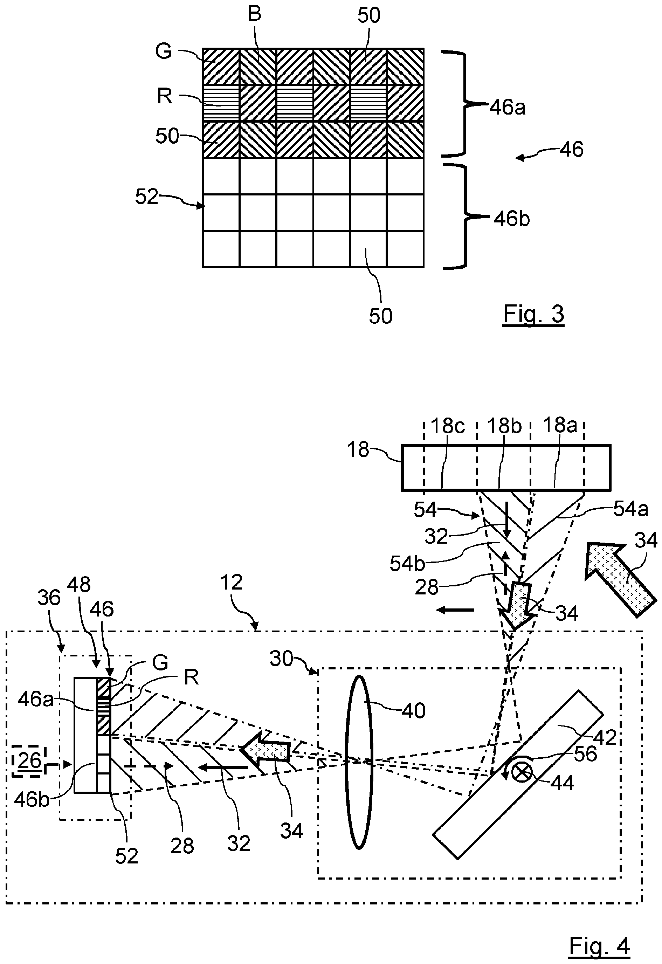

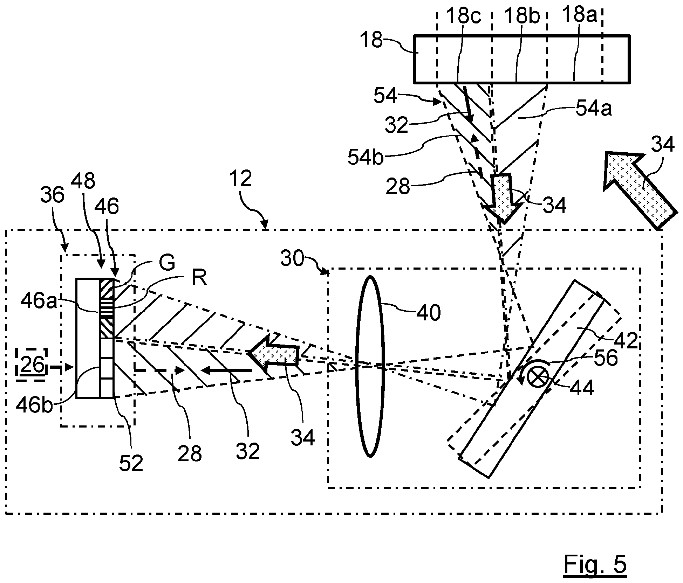

Die Strahlbeeinflussungseinrichtung 30 ist im Detail in den Figuren 4 und 5 gezeigt. Die Figuren 4 und 5 zeigen den Laserscanner 12 bei zwei nacheinander folgenden Messungen, bei denen ein Objekt 18 im Überwachungsbereich 14 erfasst wird.

Die Strahlbeeinflussungseinrichtung 30 umfasst ein optisches Bauteil in Form einer optischen Linse 40 und ein Umlenkbauteil in Form eines Umlenkspiegels 42.

Der Umlenkspiegel 42 ist um eine Drehachse 44 drehbar gelagert. Bei dem gezeigten Ausführungsbeispiel verläuft die Drehachse 44 senkrecht zu einer Fahrzeuglängsachse und senkrecht zu einer Fahrzeugquerachse des Fahrzeugs 10. Betriebsgemäß kann der Umlenkspiegel 42 in horizontaler Richtung um die Drehachse 44 geschwenkt werden. So kann der Überwachungsbereich 14 in horizontaler Richtung abgetastet werden.

Mit dem Umlenkspiegel 42 können die Ausbreitungsrichtungen von elektromagnetischen Strahlen, nämlich der Abtaststrahlen 28, der reflektierten Abtaststrahlen 32 und der reflektierten Beleuchtungsstrahlen 34 aus dem Überwachungsbereich 14 abhängig von der Drehstellung des Umlenkspiegels 42 umgelenkt werden. In den Figuren 4 und 5 ist der Umlenkspiegel 42 in zwei unterschiedlichen Drehstellungen gezeigt.

Die optische Linse 40 ist zwischen dem Umlenkspiegel 42 und der Empfangseinrichtung 36 angeordnet. Mit der optischen Linse 40 können die mit dem Umlenkspiegel 42 umgelenkten elektromagnetischen Strahlen, nämlich die umgelenkten reflektierten Abtaststrahlen 32 und die umgelenkten reflektierten Beleuchtungsstrahlen 34, aus dem Überwachungsbereich 14 auf einen Empfangsbereich 46 der Empfangseinrichtung 36 abgebildet werden. Die Strahlenumlenkeinrichtung 30 bildet mit der Empfangseinrichtung 36 ein optisch abbildendes System.

Die Empfangseinrichtung 36 verfügt über einen Empfänger 48, beispielsweise in Form eines CCD-Chips. Der Empfänger 48 umfasst eine Vielzahl von Empfangselementen 50, welche, wie in der Figur 3 gezeigt, matrixförmig angeordnet sind. Beispielhaft ist der Empfänger 48 in den Figuren 3 bis 5 der besseren Übersichtlichkeit wegen lediglich als 6 x 6-Matrix gezeigt. In der Regel verfügt der Empfänger 48 über deutlich mehr Empfangselemente 50. Beispielsweise kann der Empfänger 48 eine 100 x 100-Matrix oder eine noch größere Matrix aus Empfangselementen 50 aufweisen.

Die Empfangselemente 50 bilden insgesamt den Empfangsbereich 46. Der Empfangsbereich 46 ist in einen Farb-Empfangsbereich 46a und einen Abtast-Empfangsbereich 46b unterteilt. Der Farb-Empfangsbereich 46a und der Abtast-Empfangsbereich 46b sind beispielhaft in horizontaler Richtung quer zur Drehachse 44 nebeneinander angeordnet.

Die Empfangselementen 50 des Abtast-Empfangsbereichs 46 sind mit einem Bandbreitenfilter 52 maskiert. Der Bandbreitenfilter 52 enthält die Wellenlänge der Abtaststrahlen 28. Die Bandbreite des Bandbreitenfilters 52 ist so gewählt, dass unter Berücksichtigung von eventuellen Dopplerverschiebungen auch die Wellenlänge der reflektierten Abtaststrahlen 32 enthalten sind.

Die Empfangselemente 50 des Farb-Empfangsbereichs 46a sind beispielhaft mit einem RGB-Farbfilter in Form einer sogenannten Bayer-Matrix maskiert. Dabei sind den Empfangselementen 50, ähnlich einem Schachbrettmuster, Rotfilter, Grünfilter und Blaufilter zugeordnet.

Mithilfe der Strahlbeeinflussungseinrichtung 30 wird im Überwachungsbereich 14 ein Sichtfeld 54 des Empfängers 48, respektive des Empfangsbereich 46, realisiert. Objektpunkte eines Objekts 18, welche sich innerhalb des Sichtfelds 54 befinden, können auf den Empfangsbereich 46 abgebildet werden. Das Sichtfeld 54 ist analog zum Empfangsbereich 46 in ein Farb-Sichtfeld 54a und ein Abtast-Sichtfeld 54b unterteilt. Dabei ist das Farb-Sichtfeld 54a dem Farb-Empfangsbereich 46a zugeordnet. Das Abtast-Sichtfeld 54b ist dem Abtast-Empfangsbereich 46b zugeordnet. Das Farb-Sichtfeld 54a und das Abtast-Sichtfeld 54b liegen beispielhaft senkrecht zur Drehachse 44 nebeneinander bezüglich derselben Ebene wie der Farb-Empfangsbereich 46a und der Abtast-Empfangsbereich 46b.

Bei einer Drehung des Umlenkspiegels 42 um die Drehachse 44 wird das Sichtfeld 54 parallel zu der Ebene senkrecht zur Drehachse 44 entsprechend der Drehrichtung 56 des Umlenkspiegels 42 in horizontaler Richtung geschwenkt.

Bei den zwei Messungen, welche in der Figur 4 und 5 dargestellt sind, wird der Umlenkspiegel 42 beispielhaft entgegen dem Uhrzeigersinn beispielsweise mit einer entsprechenden Antriebseinrichtung gedreht. Das Sichtfeld 54 wird so in den Figuren 4 und 5 nach links geschwenkt. Durch entsprechend schrittweises Drehen des Umlenkspiegels 42 wird erreicht, dass das Farb-Sichtfeld 54a bei der zweiten Messung, die in der Figur 5 gezeigt ist, einen Abschnitt des Überwachungsbereichs 14 abdeckt, welcher in der vorherigen Messung, dargestellt in der Figur 4, von dem Abtast-Sichtfeld 54 abgedeckt wurde.

Die Sendeeinrichtung 26, die Empfangseinrichtung 36 und die Strahllenkeinrichtung 30 sind so aneinander angepasst, dass die Abtaststrahlen 28, welche mit der Sendeeinrichtung 26 gesendet werden, durch entsprechende Umlenkung mit dem Umlenkspiegel 42 stets in das Abtast-Sichtfeld 54b der Empfangseinrichtung 36 fallen. So können an einem Objekt 18 reflektierte Abtaststrahlen 32 auf den Abtast-Empfangsbereich 46b der Empfangseinrichtung 36 abgebildet werden.

Zur Überwachung des Überwachungsbereichs 14 auf Objekte 18 hin werden mit dem Laserscanner 12 mehrere Messungen mit unterschiedlichen Drehstellungen des Umlenkspiegels 42 durchgeführt. Im Folgenden wird das Verfahren beispielhaft an den beiden Messungen erläutert, welche in den Figuren 4 und 5 gezeigt sind.

Bei der ersten Messung, welche in der Figur 4 dargestellt ist, befindet sich der Umlenkspiegel 42 in einer ersten Drehstellung. Mit der Sendeeinrichtung 26 wird ein Abtaststrahl 28 in Form eines Laserpulses auf den Umlenkspiegel 42 gesendet. Mit dem Umlenkspiegel 42 wird der Abtaststrahl 28 entsprechend der Drehstellung in den Überwachungsbereich 14 gelenkt.

Bei dem gezeigten Ausführungsbeispiel trifft der Abtaststrahl 28 auf eine zweite Zone 18b des Objekts 18, welche sich bei der gezeigten Drehorientierung des Umlenkspiegels 42 in dem Abtast-Sichtfeld 54b befindet. Eine benachbarte erste Zone 18a des Objekts 18 wird mit dem Farb-Sichtfeld 54a erfasst.

Die Abtaststrahlen 28 werden in der zweiten Zone 18b des Objekts 18 reflektiert und als reflektierte Abtaststrahlen 32 zu dem Umlenkspiegel 42 gesendet.

Mit dem Umlenkspiegel 42 werden die reflektierten Abtaststrahlen 32 umgelenkt und mit der optischen Linse 40 auf den Abtast-Empfangsbereich 46b der Empfangseinrichtung 36 abgebildet.

Aus der Zeit zwischen dem Senden der Abtaststrahlen 28 bis zum Empfangen der reflektierten Abtaststrahlen 32 wird die Entfernung 22 der zweiten Zone 18b des Objekts 18 zu dem Laserscanner 12 bestimmt. Die Richtung 24 wird aus der Drehstellung des Umlenkspiegels 42 bestimmt. Die Geschwindigkeit kann aus einer Dopplerverschiebung der reflektierten Abtaststrahlen 32 ermittelt werden.

Sofern das Objekt 18, wie in den Figuren 4 und 5 gezeigt, durch eine externe Lichtquelle, beispielsweise die Sonne, mit Beleuchtungsstrahlen 34 angestrahlt wird, werden die Beleuchtungsstrahlen 34 an dem Objekt 18 reflektiert. Die Beleuchtungsstrahlen 34, welche auf die erste Zone 18a und auf die zweite Zone 18b des Objekts 18 treffen und dort reflektiert werden, werden von dem Sichtfeld 54 der Empfangseinrichtung 36 erfasst.

Die innerhalb des Sichtfeldes 54, also in den Zonen 18a und 18b des Objekts 18, reflektierten Beleuchtungsstrahlen 34 werden mit dem Umlenkspiegel 42 umgelenkt und mit der optischen Linse 40 auf den Empfangsbereich 46 abgebildet. Aufgrund des Bandbreitenfilters 52 gelangt nur der Teil der reflektierten Beleuchtungsstrahlen 34 zu dem Abtast-Empfangsbereich 46, welcher innerhalb der Bandbreite des Bandbreitenfilters 52 liegt. Auf diese Weise kann ein Signal-Rausch-Verhältnis für die ebenfalls mit dem Abtast-Empfangsbereich 46 empfangenen reflektierten Abtaststrahlen 32 verbessert werden.

Der Teil der elektromagnetischen Beleuchtungsstrahlen 34, der auf den Farb-Empfangsbereich 46a trifft, wird entsprechend der Filterung mit den Rotfiltern R, den Grünfiltern G und den Blaufiltern B der Bayer-Matrix auf die entsprechenden Empfangselemente 50 abgebildet und mit diesen erfasst. Mit dem Farb-Empfangsbereich 46a werden ortsaufgelöste Farbinformationen über die erste Zone 18a des Objekts 18, welche in dem Farb-Sichtfeld 54a liegt, ermittelt.

Bei der ersten Messung werden also gleichzeitig die Positionsinformationen der zweiten Zone 18b und die Farbinformationen der ersten Zone 18a ermittelt.

Für die zweite Messung, dargestellt in der Figur 5, wird der Umlenkspiegel 42 in Drehrichtung 56 um einen Schritt geschwenkt, so dass das Farb-Sichtfeld 54a die zweite Zone 18b des Objekts 18 erfasst, welche bei der ersten Messung von dem Abtast-Sichtfeld 54b erfasst wurde. Das Abtast-Sichtfeld 54b erfasst bei der zweiten Messung eine dritte Zone 18c des Objekts 18, welche auf der der ersten Zone 18a gegenüberliegenden Seite der zweiten Zone 18b liegt.

Lediglich zum Vergleich ist in der Figur 5 der Umlenkspiegel 42 in der Drehstellung gemäß der ersten Messung gestrichelt angedeutet.

Bei der zweiten Messung wird analog zur ersten Messung ein Abtaststrahl 28 in Form eines Laserpulses gesendet und mit dem Umlenkspiegel 42 so umgelenkt, dass er innerhalb des Abtast-Sichtfelds 54b auf die dritte Zone 18c des Objekts 18 fällt. Aus den reflektierten Abtaststrahlen 32 werden analog zur ersten Messung die Positionsinformationen der dritten Zone 18c des Objekts 18 ermittelt.

Außerdem werden bei der zweiten Messung analog zur ersten Messung aus den reflektierten Beleuchtungsstrahlen 34 die Farbinformationen der zweiten Zone 18b ermittelt.

Zur Abtastung des gesamten Überwachungsbereichs 14 wird ein Messzyklus durchgeführt, bei dem nacheinander eine Vielzahl derartiger Messungen bei unterschiedlichen Drehstellung des Umlenkspiegels 42 ausgeführt werden und so der Überwachungsbereich 14 sukzessive abgetastet wird.

Nach Durchführung des Messzyklus werden die Farbinformationen und Objektformationen, die bei den einzelnen Messungen gewonnenen wurden, fusioniert. Dabei werden die Farbinformationen und die Positionsinformationen, welche dieselben Zonen eines Objekts 18 betreffen, zusammengebracht. Beispielsweise wenn die Positionsinformationen aus einer Messung mit den Farbinformationen einer nachfolgenden Messung, welche die selbe Zone des Objekts 18 betrifft, fusioniert.

Beispielsweise werden bei den in den Figuren 4 und 5 gezeigten Messungen die Positionsinformationen, die durch Abtasten der zweiten Zone 18b des Objekts 18 bei der ersten Messung ermittelt werden, mit den Farbinformationen aus der zweiten Zone 18b, die bei der zweiten Messung ermittelt werden, fusioniert. Auf diese Weise wird eine gesamte Objektinformation über die zweite Zone 18b ermittelt, welche sowohl die Farbinformationen als auch die Positionsinformationen enthält.

Entsprechend werden die Farbinformationen und die Positionsinformationen aller nachfolgenden und/oder vorhergehenden Messungen jeweils fusioniert.

Insgesamt werden für alle zentralen Zonen des Objekts 18 sowohl die Farbinformationen als auch die Positionsinformationen ermittelt. Für die Randzonen des Objekts 18 werden entweder die Positionsinformationen oder die Farbinformationen ermittelt.

## Patentansprüche

1. Optische Detektionsvorrichtung (12) zur Überwachung wenigstens eines Überwachungsbereichs (14) auf Objekte (18) hin,
- mit wenigstens einer Sendeeinrichtung (26), mit der elektromagnetische Strahlen (28) zum Abtasten des Überwachungsbereichs (14) gesendet werden können,
- mit wenigstens einer Empfangseinrichtung (36), mit der elektromagnetische Strahlen (32, 34) aus dem wenigstens einen Überwachungsbereich (14) empfangen werden können,
- mit wenigstens einer veränderbaren Strahlbeeinflussungseinrichtung (30), mit der elektromagnetische Strahlen (28, 32, 34) zumindest bezüglich ihrer Ausbreitungsrichtung beeinflusst werden können,
- mit wenigstens einer Steuer- und Auswerteeinrichtung (38), mit der die optische Detektionsvorrichtung (12) gesteuert werden kann und mit der aus empfangenen elektromagnetischen Strahlen (32, 34) Objektinformationen in Bezug auf Position (22, 24) und Farbe wenigstens eines erfassten Objekts (18) ermittelt werden können,
**dadurch gekennzeichnet, dass** wenigstens eine Empfangseinrichtung (36) aufweist
- wenigstens einen Farb-Empfangsbereich (46a), mit dem Farbinformationen wenigstens eines Objekts (18) aus empfangenen elektromagnetischen Beleuchtungsstrahlen (34) ermittelt werden können,
- und wenigstens einen Abtast-Empfangsbereich (46b), mit dem elektromagnetische Abtaststrahlen (32), die mit wenigstens einer Sendeeinrichtung (26) gesendet und in dem wenigstens einen Überwachungsbereich (14) reflektiert werden, empfangen werden können, aus denen Positionsinformationen (22, 24) wenigstens eines Objekts (18) ermittelt werden können.

2. Optische Detektionsvorrichtung nach Anspruch 1, **dadurch gekennzeichnet, dass** wenigstens eine Empfangseinrichtung (36) wenigstens einen Empfänger (48) umfasst, der wenigstens einen Farb-Empfangsbereich (46a) und wenigstens einen Abtast-Empfangsbereich (46b) aufweist.

3. Optische Detektionsvorrichtung nach Anspruch 1 oder 2, **dadurch gekennzeichnet, dass** wenigstens ein Farb-Empfangsbereich (46a) eine Mehrzahl von Empfangselementen (50) aufweist und/oder wenigstens ein Entfernungs-Empfangsbereich eine Mehrzahl von Empfangselementen (50) aufweist.

4. Optische Detektionsvorrichtung nach einem der vorigen Ansprüche, **dadurch gekennzeichnet, dass** wenigstens ein Farb-Empfangsbereich (46a) und wenigstens ein Abtast-Empfangsbereich (46b) räumlich nebeneinander angeordnet sind.

5. Optische Detektionsvorrichtung nach einem der vorigen Ansprüche, **dadurch gekennzeichnet, dass** wenigstens ein Farb-Empfangsbereich (46a) und wenigstens ein Abtast-Empfangsbereich (46b) bezüglich einer Ebene nebeneinander angeordnet sind, in der eine Ausbreitungsrichtung der elektromagnetischen Abtaststrahlen (28, 32) mit der wenigstens einen Strahlbeeinflussungseinrichtung (30) verändert werden kann.

6. Optische Detektionsvorrichtung nach einem der vorigen Ansprüche, **dadurch gekennzeichnet, dass** wenigstens einem Farb-Empfangsbereich (46a) wenigstens ein optischer Farbfilter (R, G, B) zugeordnet ist und/oder wenigstens einem Abtast-Empfangsbereich (46b) wenigstens ein optischer Bandbreitenfilter (52) zugeordnet ist, welcher die Wellenlänge der elektromagnetischen Abtaststrahlen (28, 32) enthält.

7. Optische Detektionsvorrichtung nach einem der vorigen Ansprüche, **dadurch gekennzeichnet, dass** wenigstens einem Farb-Empfangsbereich (46a) wenigstens ein optischer Farbfilter (R, G, B) in Form einer Bayer-Matrix zugeordnet ist.

8. Optische Detektionsvorrichtung nach einem der vorigen Ansprüche, **dadurch gekennzeichnet, dass** die Wellenlänge wenigstens eines Teils der elektromagnetischen Abtaststrahlen (28, 32) in einem für das menschliche Auge nicht sichtbaren Wellenlängenbereich, insbesondere im nahen Infrarot, liegt.

9. Optische Detektionsvorrichtung nach einem der vorigen Ansprüche, **dadurch gekennzeichnet, dass** wenigstens eine Strahlbeeinflussungseinrichtung (30) wenigstens ein optisches Bauteil (40), mit dem elektromagnetische Strahlen (32, 34) gebeugt oder gebrochen werden können, und/oder wenigstens ein Umlenkbauteil (42), mit dem Ausbreitungsrichtungen von elektromagnetischen Strahlen (28, 32, 34) umgelenkt werden können, aufweist.

10. Optische Detektionsvorrichtung nach einem der vorigen Ansprüche, **dadurch gekennzeichnet, dass** wenigstens eine Sendeeinrichtung (26), wenigstens eine Empfangseinrichtung (36) und wenigstens eine Strahlbeeinflussungseinrichtung (30) so aneinander angepasst sind, dass sich die elektromagnetischen Abtaststrahlen (28, 32) im Überwachungsbereich (14) innerhalb eines jeweiligen Sichtfeldes (54b) wenigstens eines Abtast-Empfangsbereichs (46b) ausbreiten können.

11. Verfahren zum Betreiben einer optischen Detektionsvorrichtung (12) zur Überwachung wenigstens eines Überwachungsbereichs (14) auf Objekte (18) hin, bei dem bei nacheinander folgenden Messungen jeweils
- mit wenigstens einer Sendeeinrichtung (26) elektromagnetische Strahlen (28) gesendet werden zum Abtasten des wenigstens einen Überwachungsbereichs (14),
- mit wenigstens einer Empfangseinrichtung (36) elektromagnetische Strahlen (32, 34) aus dem wenigstens einen Überwachungsbereich (14) empfangen werden,
- aus den empfangenen elektromagnetischen Strahlen (32, 34) Objektinformationen in Bezug auf Position (22, 24) und Farbe wenigstens eines erfassten Objekts (18) ermittelt werden,
- wobei mit wenigstens einer veränderbaren Strahlbeeinflussungseinrichtung (30) zwischen wenigstens zwei Messungen wenigstens für einen Teil der elektromagnetischen Strahlen (28, 32, 34) wenigstens eine jeweilige Ausbreitungsrichtung geändert wird,
**dadurch gekennzeichnet, dass**
- elektromagnetische Beleuchtungsstrahlen (34) aus dem wenigstens einen Überwachungsbereich (14) mit wenigstens einem Farb-Empfangsbereich (46a) wenigstens einer Empfangseinrichtung (36) empfangen werden und aus den empfangenen elektromagnetischen Beleuchtungsstrahlen (34) Farbinformationen wenigstens eines erfassten Objekts (18) ermittelt werden,
- in dem wenigstens einen Überwachungsbereich (14) reflektierte elektromagnetische Abtaststrahlen (32) mit wenigstens einem Abtast-Empfangsbereich (46b) empfangen werden und aus der empfangenen elektromagnetischen Abtaststrahlen (32) Positionsinformationen (22, 24) wenigstens eines erfassten Objekts (18) ermittelt.

12. Verfahren nach Anspruch 11, **dadurch gekennzeichnet, dass** wenigstens ein Teil der Farbinformationen und wenigstens ein Teil der Positionsinformationen (22, 24) des wenigstens einen erfassten Objekts (18) fusioniert werden.

13. Verfahren nach Anspruch 11 oder 12, **dadurch gekennzeichnet, dass** wenigstens ein Teil der Farbinformationen aus einer Messung fusioniert wird mit wenigstens einem Teil der Positionsinformationen (22, 24) aus einer anderen Messung, wobei die Ausbreitungsrichtungen der elektromagnetischen Abtaststrahlen (28) und die Sichtfelder (54a, 54b) des wenigstens einen Abtast-Empfangsbereichs (46b) und des wenigstens einen Farb-Empfangsbereichs (46a) zwischen den Messungen verändert werden.

14. Verfahren nach einem der Ansprüche 11 bis 13, **dadurch gekennzeichnet, dass** zwischen zwei Messungen jeweilige Ausbreitungsrichtungen von elektromagnetischen Abtaststrahlen (28), von reflektierten elektromagnetischen Abtaststrahlen (32) und von elektromagnetische Beleuchtungsstrahlen (34), die an wenigstens einem Objekt (18) reflektiert werden, so verändert werden, dass mit einem Farb-Sichtfeld (54a) wenigstens eines Farb-Empfangsbereichs (46a) bei einer der Messungen eine Zone (18b) des wenigstens einen Objekts (18) erfasst wird, welche bei einer anderen Messung wenigstens teilweise in einem Abtast-Sichtfeld (54b) wenigstens eines Abtast-Empfangsbereichs (46b) liegt und von dem entsprechenden Abtast-Sichtfeld (54b) erfasst wird.

15. Verfahren nach einem der Ansprüche 11 bis 14, **dadurch gekennzeichnet, dass** die Sichtfelder (54a, 54b) wenigstens eines Abtast-Empfangsbereichs (46b) und wenigstens eines Farb-Empfangsbereichs (46a) schrittweise von Messung zu Messung in wenigstens eine Richtung geschwenkt werden.
